# EUROPEAN PATENT APPLICATION

(11) **EP 4 685 436 A1**
(43) Date of publication of application: **28.01.2026**
(21) Application number: 24774681.1
(22) Date of filing: 06.03.2024
(51) Int. Cl.: G01C 15/00

(54) **SURVEYING DEVICE**

(30) Priority: 23.03.2023 JP 2023046151
(71) Applicant: TOPCON CORPORATION, Tokyo 174-8580, (JP)
(72) Inventor: YUASA, Taichi, Tokyo 174-8580 (JP)
(74) Representative: Louis Pöhlau Lohrentz
(86) International application number: PCT/JP2024/008506
(87) International publication number: WO 2024/195540

(57) **Abstract**

A surveying instrument comprises a distance measuring light projecting module (23) having a light emitter (28) which projects a distance measuring light (35) to an object, a distance measuring light receiving module (24) having a photodetector (39) which receives a reflected distance measuring light (49) from the object, a tracking light projecting module (25) having a tracking light emitter (53) which projects a tracking light (36) coaxially with the distance measuring light to the object, a tracking light receiving module (26) having a tracking photodetector which receives a reflected tracking light (51) from the object coaxially with the reflected distance measuring light, and an arithmetic control module which controls the distance measuring light projecting module and the tracking light projecting module, calculates a distance to the object based on a light receiving result of the reflected distance measuring light with respect to the photodetector, and calculates a position deviation between the object and a center of the tracking photodetector based on a light receiving position of the reflected tracking light with respect to the tracking photodetector, wherein the distance measuring light receiving module and the tracking light receiving module each have a light receiving prism, and the light receiving prism is configured to internally reflect the reflected tracking light three times.

## Description

### TECHNICAL FIELD

The present invention relates to a surveying instrument capable of acquiring three-dimensional coordinates of an object.

### BACKGROUND ART

The surveying instrument such as a laser scanner and a total station has an electronic distance meter which detects a distance to an object by a prism distance measurement using a prism with a retro-reflectivity as an object or non-prism distance measurement not using a reflection prism.

Some of the surveying instruments perform a distance measurement and a tracking of an object at the same time, but in the case of a conventional tracking-light receiving system, a back focus is insufficient and thus, there is a need to use a light receiving lens with a long focal distance. Therefore, an angle of view of a tracking-light receiving system becomes small, a trackable range of a prism with a retro-reflectivity is narrow, and particularly in a case of a short distance or when a moving speed of a prism is fast, there is a concern that a usability gets worse.

### PRIOR ART REFERENCES

### PATENT DOCUMENT

[Patent Document 1]
Japanese Patent No. 6557548

### SUMMARY OF THE INVENTION

### PROBLEM TO BE SOLVED BY THE INVENTION

The present invention provides a surveying instrument which ensures a back focus and promotes an enlargement of a trackable range.

### MEANS FOR SOLVING THE PROBLEM

The present invention relates to a surveying instrument comprising a distance measuring light projecting module having a light emitter which projects a distance measuring light to an object, a distance measuring light receiving module having a photodetector which receives a reflected distance measuring light from the object, a tracking light projecting module having a tracking light emitter which projects a tracking light coaxially with the distance measuring light to the object, a tracking light receiving module having a tracking photodetector which receives a reflected tracking light from the object coaxially with the reflected distance measuring light, and an arithmetic control module which controls the distance measuring light projecting module and the tracking light projecting module, calculates a distance to the object based on a light receiving result of the reflected distance measuring light with respect to the photodetector, and calculates a position deviation between the object and a center of the tracking photodetector based on a light receiving position of the reflected tracking light with respect to the tracking photodetector, wherein the distance measuring light receiving module and the tracking light receiving module each have a light receiving prism, and the light receiving prism is configured to internally reflect the reflected tracking light three times.

Further, the present invention relates to the surveying instrument, wherein the light receiving prism has a first prism and a second prism joined to the first prism, a separation surface is formed on a joined surface of the first prism and the second prism, the separation surface is configured to cause the reflected distance measuring light to be transmitted and to be received by the photodetector and to cause the reflected tracking light to be reflected and received by the tracking photodetector.

Further, the present invention relates to the surveying instrument, wherein the first prism is configured to have a first surface into which the reflected tracking light is incident at a right angle, a second surface which reflects the reflected tracking light having been transmitted through the first surface, a third surface as the separation surface which reflects the reflected tracking light reflected by the second surface toward the first surface, and a fourth surface into which the reflected tracking light reflected by the first surface is incident at a right angle.

Further, the present invention relates to the surveying instrument, wherein the first prism is configured to have a first surface into which the reflected tracking light is incident at a right angle, a second surface which reflects the reflected tracking light having been transmitted through the first surface, and a third surface as the separation surface which reflects the reflected tracking light reflected by the second surface toward the first surface, and to deposit short pass filters on the first surface and the second surface, wherein the reflected tracking light having been transmitted through the first surface is incident into the second surface at an incident angle at which a transmittance is in the vicinity of 0%, the reflected tracking light sequentially reflected by the second surface and the third surface is incident into the first surface at an incident angle at which a transmittance is in the vicinity of 0%, and the reflected tracking light reflected by the first surface is incident into the second surface at a right angle.

Further, the present invention relates to the surveying instrument, wherein the first prism is configured to have a first surface into which the reflected tracking light is incident at a right angle, a second surface which reflects the reflected tracking light having been transmitted through the first surface, and a third surface as the separation surface which reflects the reflected tracking light reflected by the second surface toward the first surface, and to deposit AR coat on the first surface and the second surface, wherein the reflected tracking light having been transmitted through the first surface is incident into the second surface at an incident angle equal to or larger than a critical total-reflection angle, the reflected tracking light sequentially reflected by the second surface and the third surface is incident into the first surface at an incident angle equal to or larger than the critical total-reflection angle, and the reflected tracking light reflected by the first surface is incident into the second surface at a right angle.

Further, the present invention relates to the surveying instrument, wherein the light receiving prism further has a third prism joined to the second surface of the first prism, a separation film, which reflects the reflected distance measuring light and the reflected tracking light and transmits a visible light, is formed on a joined surface of the first prism and the third prism, and a sighting module is provided on a transmission optical axis of the separation film.

Further, the present invention relates to the surveying instrument, wherein band pass filters are provided between the photodetector and the light receiving prism, and between the tracking photodetector and the light receiving prism, respectively.

Furthermore, the present invention relates to the surveying instrument, wherein a colored glass is interposed between the first prism and the second prism, and the separation surface is formed on a joined surface between the colored glass and the second prism.

### EFFECTS OF THE INVENTION

According to the present invention, the surveying instrument comprises a distance measuring light projecting module having a light emitter which projects a distance measuring light to an object, a distance measuring light receiving module having a photodetector which receives a reflected distance measuring light from the object, a tracking light projecting module having a tracking light emitter which projects a tracking light coaxially with the distance measuring light to the object, a tracking light receiving module having a tracking photodetector which receives a reflected tracking light from the object coaxially with the reflected distance measuring light, and an arithmetic control module which controls the distance measuring light projecting module and the tracking light projecting module, calculates a distance to the object based on a light receiving result of the reflected distance measuring light with respect to the photodetector, and calculates a position deviation between the object and a center of the tracking photodetector based on a light receiving position of the reflected tracking light with respect to the tracking photodetector, wherein the distance measuring light receiving module and the tracking light receiving module each have a light receiving prism, and the light receiving prism is configured to internally reflect the reflected tracking light three times. As a result, a back focus is ensured, thereby a lens with a short focal distance is usable, and it is possible to promote enlargement of a trackable range, an increase of a short-distance received light amount, and an improvement of a distance measuring accuracy.

### BRIEF DESCRIPTION OF DRAWINGS

[FIG.1]

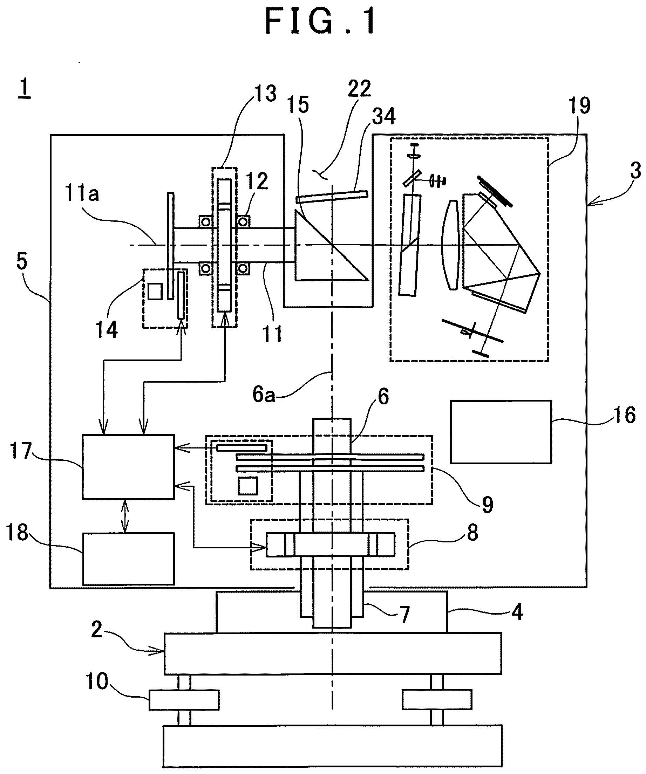

   FIG.1 is a front sectional diagram illustrating a surveying instrument according to a first embodiment.
[FIG.2]

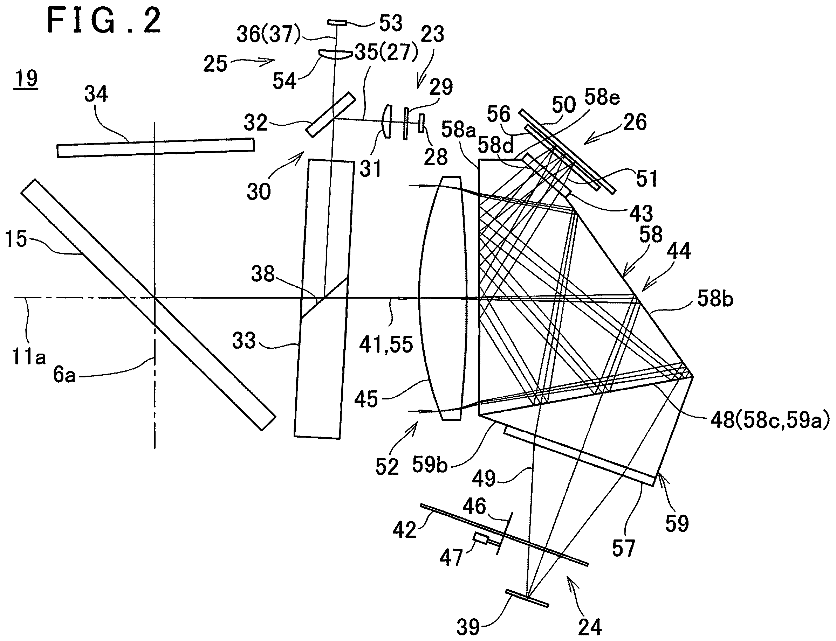

   FIG.2 is a configuration diagram illustrating a distance measuring module according to the first embodiment.
[FIG.3]

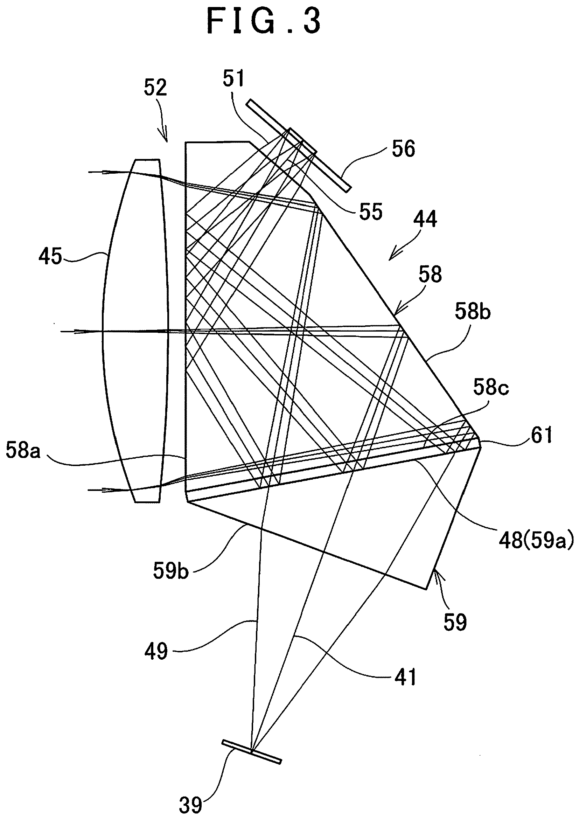

   FIG.3 is a configuration diagram illustrating a distance measuring module according to a second embodiment.
[FIG.4]

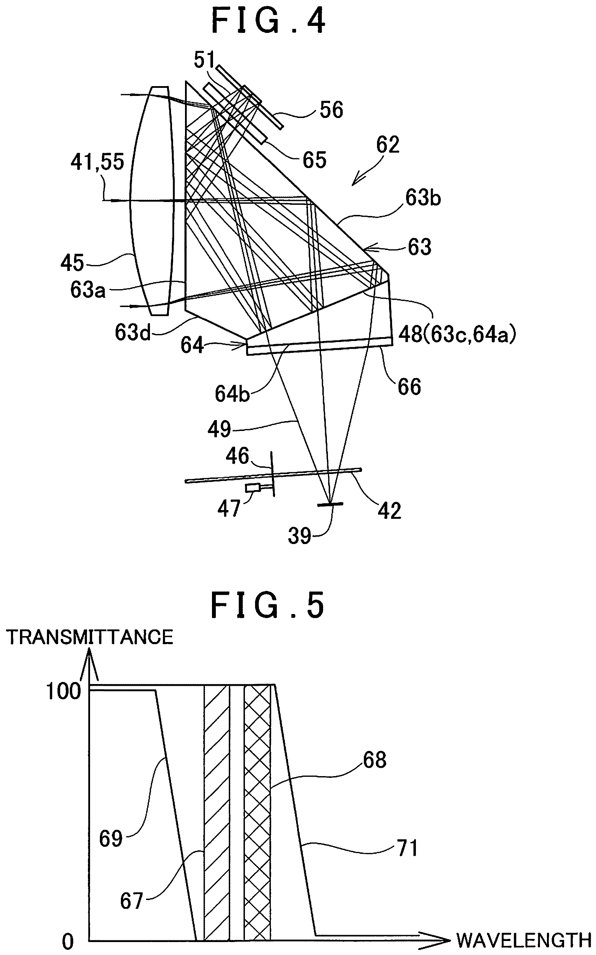

   FIG.4 is a configuration diagram illustrating a distance measuring module according to a third embodiment.
[FIG.5]
   FIG.5 is a graph for explaining a transmittance of a short pass filter.
[FIG.6]

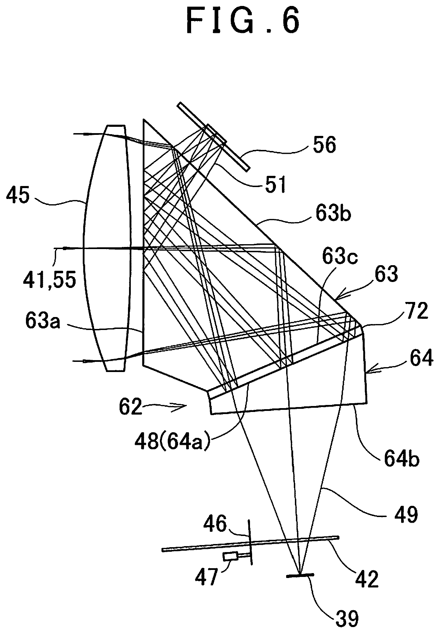

   FIG.6 is a configuration diagram illustrating a distance measuring module according to a fourth embodiment.
[FIG.7]

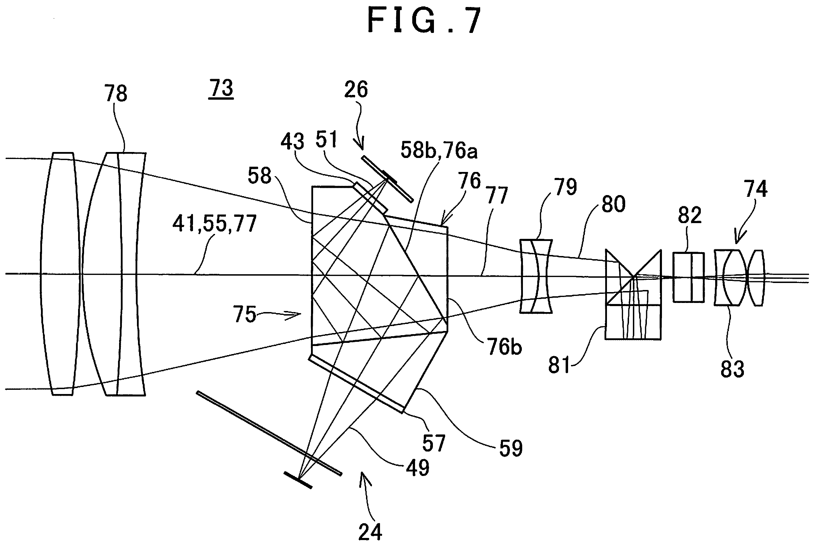

   FIG.7 is a configuration diagram illustrating a distance measuring module according to a fifth embodiment.

### MODE(S) FOR CARRYING OUT THE INVENTION

A description will be given below on embodiments of the present invention by referring to the attached drawings.

First, in FIG.1, a description will be given on a surveying instrument according to a first embodiment of the present invention.

A surveying instrument 1 is a laser scanner, for instance, constituted by a leveling module 2 mounted on a tripod (not shown) and a surveying instrument main body 3 mounted on the leveling module 2.

The leveling module 2 has a leveling screw 10 and performs leveling of the surveying instrument main body 3 by the leveling screw 10.

The surveying instrument main body 3 includes a fixing unit 4, a frame unit 5, a horizontal rotation shaft 6, a horizontal rotation bearing 7, a horizontal rotation motor 8 as a horizontal rotation driver, a horizontal angle encoder 9 as a horizontal angle detector, a vertical rotation shaft 11, a vertical rotation bearing 12, a vertical rotation motor 13 as a vertical rotation driver, a vertical angle encoder 14 as a vertical angle detector, a scanning mirror 15 which is a vertical rotation unit, an operation panel 16 serving both as an operation module and a display module, an arithmetic control module 17, a storage module 18, a distance measuring module 19, etc. It is to be noted that, as the arithmetic control module 17, a CPU specialized for this instrument or a general-purpose CPU is used.

The horizontal rotation bearing 7 is fixed to the fixing unit 4. The horizontal rotation shaft 6 has a vertical axis 6a, and the horizontal rotation shaft 6 is rotatably supported by the horizontal rotation bearing 7. Further, the frame unit 5 is supported by the horizontal rotation shaft 6, and the frame unit 5 is configured to be rotated in the horizontal direction integrally with the horizontal rotation shaft 6.

Between the horizontal rotation bearing 7 and the frame unit 5, the horizontal rotation motor 8 is provided, and the horizontal rotation motor 8 is controlled by the arithmetic control module 17. The arithmetic control module 17 causes the frame unit 5 to be rotated around the axis 6a by the horizontal rotation motor 8.

A relative rotation angle of the frame unit 5 with respect to the fixing unit 4 is detected by the horizontal angle encoder 9. A detection signal from the horizontal angle encoder 9 is input into the arithmetic control module 17, and a horizontal angle data is calculated by the arithmetic control module 17. The arithmetic control module l7 performs a feedback control with respect to the horizontal rotation motor 8 based on the horizontal angle data.

Further, the vertical rotation shaft 11 having a horizontal axis 11a is provided in the frame unit 5. The vertical rotation shaft 11 is rotatable via the vertical rotation bearing 12. It is to be noted that an intersection of the axis 6a and the axis 11a is a projection position of a distance measuring light and is an origin of a coordinate system of the surveying instrument main body 3.

In the frame unit 5, a recess portion 22 is formed. One end part of the vertical rotation shaft 11 extends into the recess portion 22, the scanning mirror 15 is fixed to the one end part, and the scanning mirror 15 is accommodated in the recess portion 22. Further, at the other end part of the vertical rotation shaft 11, the vertical angle encoder 14 is provided.

The vertical rotation motor 13 is provided on the vertical rotation shaft 11, and the vertical rotation motor 13 is controlled by the arithmetic control module 17. The arithmetic control module 17 rotates the vertical rotation shaft 11 by the vertical rotation motor 13, and the scanning mirror 15 is rotated around the axis 11a.

A rotation angle of the scanning mirror 15 is detected by the vertical angle encoder 14, and a detection signal is input into the arithmetic control module 17. The arithmetic control module 17 calculates a vertical angle data of the scanning mirror 15 based on the detection signal, and performs feedback control with respect to the vertical rotation motor 13 based on the vertical angle data.

Further, the horizontal angle data and the vertical angle data calculated by the arithmetic control module 17, and measurement results are stored in the storage module 18. As the storage module 18, various types of storage devices such as an HDD as a magnetic recording device, a CD and a DVD as an optical storage device, a memory card and a USB memory as a semiconductor storage device are used. The storage module 18 may be attached to or detached from the frame unit 5 or may be capable of transmitting a data to an external storage device and an external data processing device via a communication means, not shown.

In the storage module 18, various types of programs such as a sequence program for controlling a distance measuring operation, a calculation program for calculating a distance by a distance measuring operation, a calculation program for calculating an angle based on the horizontal angle data and the vertical angle data, a program for calculating three-dimensional coordinates of a desired measuring point based on the distance and the angle, are stored. Further, when the various types of programs are executed by the arithmetic control module 17, the various types of processing are executed.

The operation panel 16 is, for instance, a touch panel, and serves both as an operation module for instructing a distance measurement and for changing measurement conditions such as a measuring point interval, for instance, and a display module for displaying distance measurement results, images, etc.

Next, a description will be given on the distance measuring module 19 by referring to FIG.2.

The distance measuring module 19 has a distance measuring light projecting module 23, a distance measuring light receiving module 24, a tracking light projecting module 25, and a tracking light receiving module 26. It is to be noted that a distance measuring module is constituted by the distance measuring light projecting module 23 and the distance measuring light receiving module 24, and a tracking module is constituted by the tracking light projecting module 25 and the tracking light receiving module 26.

The distance measuring light projecting module 23 has a distance measuring optical axis 27. Further, the distance measuring light projecting module 23 has a light emitter 28 such as a laser diode (LD) which projects an infrared light with a predetermined wavelength as a distance measuring light 35, a plane-parallel plate 29, a projection lens 31, a dichroic mirror 32 provided on the distance measuring optical axis 27, and a reflection prism 33 as a deflection optical member provided on a reflection optical axis of the dichroic mirror 32, in order from a light emitting side. Further, on a reflection optical axis of the reflection prism 33, the scanning mirror 15 is provided. Further, on a reflection optical axis of the scanning mirror 15, a window portion 34 formed by a transparent material and rotating integrally with the scanning mirror 15 is provided.

It is to be noted that the plane-parallel plate 29, the projection lens 31, the dichroic mirror 32, and the reflection prism 33 constitute a light projecting optical system 30. Further, in the present embodiment, the distance measuring optical axis 27, the distance measuring optical axis 27 reflected by the dichroic mirror 32, the distance measuring optical axis 27 reflected by the reflection prism 33, and the distance measuring optical axis 27 reflected by the scanning mirror 15 are collectively called the distance measuring optical axis 27.

The plane-parallel plate 29 is, for instance, a glass plate with a predetermined plate thickness and is disposed such that an incident surface and a projection surface are orthogonal to the distance measuring optical axis 27. Further, the plane-parallel plate 29 is insertable or removable with respect to the distance measuring optical axis 27 by a driving mechanism such as a solenoid (not shown) and is inserted into or removed from as appropriate in accordance with a type and distance of an object. That is, when a prism measurement in which an object is a prism with a retro-reflectivity is performed, the plane-parallel plate 29 is inserted onto the distance measuring optical axis 27, and when a non-prism measurement for objects other than prisms is performed, the plane-parallel plate 29 is removed from on the distance measuring optical axis 27. By inserting the plane-parallel plate 29 onto the distance measuring optical axis 27, a spread angle of a distance measuring light 35 (to be described later) with an infrared wavelength or a near-infrared wavelength is enlarged only by a predetermined angle.

In a state where the plane-parallel plate 29 is not inserted onto the distance measuring optical axis 27, the projection lens 31 causes the distance measuring light 35 emitted from the light emitter 28 at a predetermined spread angle to make a parallel light flux. Further, when the plane-parallel plate 29 is inserted onto the distance measuring optical axis 27, the projection lens 31 causes the distance measuring light 35 to make slightly diverged.

The dichroic mirror 32 has an optical characteristic which reflects the distance measuring light 35 and transmits a tracking light 36 (to be described later). Further, the dichroic mirror 32 is provided on a common optical path of the distance measuring light 35 and the tracking light 36 (an intersection position of the distance measuring optical axis 27 and a tracking optical axis 37 (to be described later)). The dichroic mirror 32 deflects (reflects) the distance measuring optical axis 27 such that the distance measuring optical axis 27 coincides with the tracking optical axis 37. Therefore, the distance measuring light 35 and the tracking light 36 are emitted coaxially toward an object.

The reflection prism 33 is formed by joining two trapezoidal prisms. In a state where the two prisms are joined, the reflection prism 33 has a rectangular shape. An incident surface of the reflection prism 33 into which the distance measuring light 35 is incident is orthogonal to the distance measuring optical axis 27, and a joined surface 38 of the reflection prism 33 is tilted by a predetermined angle with respect to the distance measuring optical axis 27. Further, a projection surface of the reflection prism 33 to which the distance measuring light 35 is projected (transmitted) is configured such that the distance measuring optical axis 27 reflected by the joined surface 38 is incident with a slight tilt such as 2.5°, for instance. Therefore, the distance measuring light 35 internally reflected by the projection surface of the reflection prism 33 is prevented from being received by a photodetector 39 (to be described later). It is to be noted that a tilt angle of the joined surface 38 is an angle which deflects (reflects) the distance measuring optical axis 27 such that the distance measuring optical axis 27 coincides with a light receiving optical axis 41 (to be described later) and the axis 11a. Further, the photodetector 39 may be an Avalanche Photo Diode (APD) or an equivalent photoelectric conversion element.

A beam splitter film (not shown) is formed at a center part of the joined surface 38. The beam splitter film has an elliptic shape in accordance with a light flux of the distance measuring light 35. Further, a size of the beam splitter film is equivalent to a light flux diameter of the distance measuring light 35 or slightly larger than the light flux diameter. Further, the beam splitter film has an optical characteristic of reflecting 80% of a light and transmitting 20% of the light, for instance.

It is to be noted that a ratio between a reflectance and a transmittance in the beam splitter film is set as appropriate in accordance with a purpose and a distance to an object. For instance, when a distance to the object is close, the beam splitter film is preferably selected from ranges of the reflectance at 50 to 70% and the transmittance at 30 to 50%, for instance. Further, when a distance to the object is far, the beam splitter film is preferably selected from ranges of the reflectance at 70 to 90% and the transmittance at 10 to 30%, for instance.

The distance measuring light receiving module 24 has the light receiving optical axis 41. Further, the distance measuring light receiving module 24 has the photodetector 39, a concentration gradient film 42, a band pass filter 57 which causes only a light in a wavelength band of the distance measuring light 35 to be transmitted, and a light receiving prism 44 as provided on the light receiving optical axis 41 and also has a light receiving lens 45 with a predetermined NA (Numerical Aperture) provided on the light receiving optical axis 41 reflected by the light receiving prism 44, in order from a light receiving side.

The concentration gradient film 42 is a plastic (film) formed on a circular disk of a glass or the like and is disposed such that a part of the concentration gradient film 42 is orthogonal to the light receiving optical axis 41. Further, the concentration gradient film 42 is rotatable around a rotation shaft 46 by a motor 47 and is configured such that an incident position of a reflected distance measuring light 49 (to be described later) with respect to the concentration gradient film 42 is changed by a rotation of the concentration gradient film 42.

The concentration gradient film 42 is configured such that a transmittance is gradually increased (or decreased) from θ= 0° to 360°. Therefore, by driving the motor 47 and by controlling the incident position of the reflected distance measuring light 49 with respect to the concentration gradient film 42, it is possible to control the transmittance of the reflected distance measuring light 49 within a range from 0.0001% to 100%, for instance. The transmittance of the concentration gradient film 42 is set as appropriate in accordance with a type of the object or a distance to the object.

The light receiving prism 44 has a dichroic film 48 as a separation surface. Further, the light receiving prism 44 is configured such that the distance measuring light 35 (the reflected distance measuring light 49) reflected by the object and the tracking light 36 (a reflected tracking light 51) incident coaxially with the reflected distance measuring light 49 are reflected at least once. Further, the dichroic film 48 has optical characteristics that transmits the reflected distance measuring light 49 and reflects the reflected tracking light 51.

It is to be noted that a light receiving optical system 52 is constituted by the light receiving prism 44, the light receiving lens 45, and the reflection prism 33. Further, in the present embodiment, the light receiving optical axis 41, and the light receiving optical axis 41 as reflected by the light receiving prism 44 and the scanning mirror 15 are collectively called the light receiving optical axis 41.

The tracking light projecting module 25 has the tracking optical axis 37. Further, the tracking light projecting module 25 has a tracking light emitter 53, a tracking projection lens 54, the dichroic mirror 32, and the reflection prism 33 provided on the tracking optical axis 37, in order from the light emitting side.

It is to be noted that, in the present embodiment, the tracking optical axis 37 and the tracking optical axis 37 reflected by the reflection prism 33 and the scanning mirror 15 are collectively called the tracking optical axis 37. Further, the light emitter 28 which emits the distance measuring light 35 is provided on a reflection side of the dichroic mirror 32, and the tracking light emitter 53 which emits the tracking light 36 is provided on a transmission side of the dichroic mirror 32, but it may be constituted such that the light emitter 28 is provided on a transmission side of the dichroic mirror 32, and the tracking light emitter 53 is provided on a reflection side of the dichroic mirror 32.

The tracking light emitter 53 is, for instance, a laser diode (LD) and is configured to project the tracking light 36 with a near-infrared wavelength different from a wavelength of the distance measuring light 35. Further, the tracking projection lens 54 is configured to slightly diverge the tracking light 36 as emitted from the tracking light emitter 53.

The tracking light receiving module 26 has a tracking light receiving optical axis 55. Further, the tracking light receiving module 26 has a tracking photodetector 56, a band pass filter 43 which transmits only a light in a wavelength band of the tracking light 36, a light receiving prism 44 as provided on the tracking light receiving optical axis 55, and the light receiving lens 45 as provided on a reflection optical axis of the light receiving prism 44.

It is to be noted that, in the present embodiment, the tracking light receiving optical axis 55 and the tracking light receiving optical axis 55 reflected by the light receiving prism 44, the dichroic film 48, and the scanning mirror 15 are collectively called the tracking light receiving optical axis 55.

The tracking photodetector 56 is provided on a sensor substrate 50 and is disposed at a focusing position of the reflected tracking light 51 separated from the light receiving prism 44 by a predetermined distance. Further, the tracking photodetector 56 is a CCD or a CMOS sensor, which is an aggregation of pixels, and each pixel is configured such that it is possible to specify a position on the tracking photodetector 56. For instance, each pixel has a pixel coordinate with a center of the tracking photodetector 56 as an origin, and a position on the tracking photodetector 56 is specified by the pixel coordinate.

The distance measuring module 19 is controlled by the arithmetic control module 17. When the pulse-state distance measuring light 35 is projected onto the distance measuring optical axis 27 from the light emitter 28, the distance measuring light 35 is incident into the projection lens 31. Further, when the plane-parallel plate 29 is present on the distance measuring optical axis 27, the distance measuring light 35 is incident into the projection lens 31 while a spread angle is slightly widened via the plane-parallel plate 29.

The distance measuring light 35 as transmitted through the projection lens 31 is deflected by the dichroic mirror 32 such that the distance measuring light 35 becomes coaxial with the tracking optical axis 37 and then, is incident into an incident surface of the reflection prism 33 at a right angle, is transmitted through an inside of the reflection prism 33 and is reflected such that the distance measuring light 35 becomes coaxial with the light receiving optical axis 41 and the axis 11a on the joined surface 38. The distance measuring light 35 as projected from a projection surface of the reflection prism 33 is deflected to a right angle by the scanning mirror 15 and is irradiated an object via the window portion 34. Since the scanning mirror 15 is rotated around the axis 11a, the distance measuring light 35 orthogonally crosses the axis 11a and is rotated (scanned) in a plane including the axis 6a. It is to be noted that, when the plane-parallel plate 29 is present on the distance measuring optical axis 27, the distance measuring light 35 is emitted to an object while being slightly spread, while when there is no plane-parallel plate 29 on the distance measuring optical axis 27, the distance measuring light 35 is emitted to an object as a parallel light flux.

It is to be noted that the window portion 34 is provided with an inclination by a predetermined angle with respect to an optical axis of the distance measuring optical axis 27 such that the distance measuring light 35 reflected by the window portion 34 is not incident into the photodetector 39.

The reflected distance measuring light 49 as reflected by an object is reflected at a right angle by the scanning mirror 15 and is received by the photodetector 39 via the light receiving optical system 52, the band pass filter 57 and the concentration gradient film 42. At this time, a stray light such as an external light passing outside an optical path of the reflected distance measuring light 49 is removed by the band pass filter 57, and only the reflected distance measuring light 49 is received by the photodetector 39. Further, the reflected distance measuring light 49 is reduced by a predetermined light amount in a process of being transmitted through the concentration gradient film 42 and is received by the photodetector 39.

The arithmetic control module 17 performs a distance measurement per pulse of the distance measuring light 35 (Time of Flight) based on a time difference between a light emitting timing of the light emitter 28 and a light receiving timing of the photodetector 39 (that is, a reciprocating time of a pulsed light) and the light velocity, and calculates a distance to an object. It is to be noted that it is possible to change a light emitting timing of the light emitter 28, that is, a pulse interval, via the operation panel 16. Further, the arithmetic control module 17 is capable of calculating a three-dimensional coordinate of an object based on a distance measurement result and a horizontal angle data and a vertical angle data acquired by the horizontal angle encoder 9 and the vertical angle encoder 14.

Further, while the distance measuring light 35 is projected at a predetermined pulse interval, by rotating the frame unit 5 and the scanning mirror 15, respectively, at a constant speed, in a collaboration of a rotation in a vertical direction of the scanning mirror 15 and a rotation in a horizontal direction of the frame unit 5, the distance measuring light 35 is scanned two-dimensionally. Further, by detecting a vertical angle and a horizontal angle by the vertical angle encoder 14 and the horizontal angle encoder 9 at each pulsed light, it is possible to acquire a vertical angle data and a horizontal angle data. By means of a vertical angle data, a horizontal angle data and a distance measurement data, it is possible to acquire a three-dimensional coordinate of an object and a three-dimensional point cloud data corresponding to an object with an installation position of the surveying instrument 1 as a reference.

In parallel with a distance measuring operation, when the tracking light 36 with a wavelength different from that of the distance measuring light 35 is projected from the tracking light emitter 53, the tracking light 36 is slightly diverged by the tracking projection lens 54 and then, the tracking light 36 is made coaxial with the distance measuring light 35 in a process of being transmitted through the dichroic mirror 32.

The reflected tracking light 51 as irradiated to an object coaxially with the distance measuring light 35 and as reflected by the object is separated from the reflected distance measuring light 49 by the dichroic film 48 in a process of passing through the light receiving optical system 52 and is received by the tracking photodetector 56 via the band pass filter 43. Further, by receiving the reflected tracking light 51 by the tracking photodetector 56, it is possible to acquire a tracking image (not shown). It is configured such that a stray light such as an external light passing outside an optical path of the reflected tracking light 51 at this time is removed by the band pass filter 43, and only the reflected tracking light 51 is received by the tracking photodetector 56.

The arithmetic control module 17 is configured to calculate a position deviation between a center of the tracking photodetector 56 and a light receiving position (center of a tracking image) of the reflected tracking light 51 with respect to the tracking photodetector 56, to drive the horizontal rotation motor 8 and the vertical rotation motor 13 such that the center and a light receiving position match each other based on the position deviation, and to track an object.

Next, a description will be given on the detail of the light receiving prism 44. The light receiving prism 44 is constituted by a first prism 58 and a second prism 59. It is to be noted that, in the following explanation, the explanation will be made, in FIG. 2, with an upper side with respect to a paper surface as up, a lower side with respect to the paper surface as down, a right side with respect to the paper surface as right, a left side with respect to the paper surface as left. Further, it is assumed that the directions specified above are applied also in the other embodiments.

The first prism 58 has a predetermined refractive index and is a polygonal prism having a first surface 58a, a second surface 58b, a third surface 58c, a fourth surface 58d, and a fifth surface 58e. The first surface 58a is an incident surface of the reflected distance measuring light 49 and the reflected tracking light 51 and is configured to orthogonally cross the light receiving optical axis 41 and the tracking light receiving optical axis 55. Further, over an entire surface of the first surface 58a, an AR (Anti-Reflection) coat (reflection preventing film) is deposited.

The second surface 58b is formed at a position opposing the first surface 58a, an upper end of the second surface 58b is located on a lower side of an upper end of the first surface 58a, and a lower end of the second surface 58b is located on an upper side of a lower end of the first surface 58a. Further, the second surface 58b is inclined downward from above such that the second surface 58b is separated from the first surface 58a. It is to be noted that the second surface 58b is a mirror on which mirror-finishing is applied, for instance.

The third surface 58c is formed between a lower end of the first surface 58a and a lower end of the second surface 58b. Since the lower end of the second surface 58b is located on an upper side of a lower end of the first surface 58a, the third surface 58c is configured to be tilted upward from left toward right by a predetermined angle.

The fourth surface 58d is configured to oppose the first surface 58a and to continue upward from an upper end of the second surface 58b. Further, between an upper end of the first surface 58a and an upper end of the fourth surface 58d, the fifth surface 58e is formed.

Further, the fourth surface 58d is configured such that the fourth surface 58d is tilted upward from below in a direction approaching the first surface 58a and the reflected tracking light 51 internally reflected in the first prism 58 is incident at a right angle by an incident angle at 0°. Further, on the fourth surface 58d, the band pass filter 43 is provided over an entire surface of the fourth surface 58d. Further, at a focusing position of the reflected tracking light 51 and at a position opposing the fourth surface 58d, the tracking photodetector 56 is disposed. It is to be noted that, between the tracking photodetector 56 and the fourth surface 58d (the band pass filter 43), a gap is formed only for a predetermined distance.

The second prism 59 has a predetermined refractive index and is a polygonal prism with at least a first surface 59a and a second surface 59b. The first surface 59a is an incident surface of the reflected distance measuring light 49 and the reflected tracking light 51 reflected in the first prism 58, has the same area as that of the third surface 58c, and is joined to the third surface 58c. That is, the third surface 58c and the first surface 59a are joined surfaces which join the first prism 58 and the second prism 59. Further, the dichroic film 48 which transmits the reflected distance measuring light 49 and reflects the reflected tracking light 51 is provided on the joined surface of the first prism 58 and the second prism 59.

The second surface 59b is configured such that the second surface 59b continues from a left end of the first surface 59a and continues from a lower end of the first surface 58a, and the reflected distance measuring light 49 having been transmitted through the dichroic film 48 is incident at a right angle by an incident angle of 0°. Further, on the second surface 59b, the band pass filter 57 with a predetermined size is provided. The band pass filter 57 may be provided over an entire surface of the second surface 59b or may be provided slightly larger than a light flux diameter of the reflected tracking light 51 with the tracking light receiving optical axis 55 as a center. When the band pass filter 57 is not provided on an entire surface of the second surface 59b, a reflection preventing paint is applied to a part on which the band pass filter 57 is not provided. Further, the photodetector 39 is provided at a focusing position of the reflected distance measuring light 49.

The reflected distance measuring light 49 and the reflected tracking light 51 reflected by an object and the scanning mirror 15 and transmitted through the light receiving lens 45 are incident coaxially at a right angle with respect to the first surface 58a of the first prism 58. The reflected distance measuring light 49 and the reflected tracking light 51 incident into the first prism 58 are reflected by the second surface 58b, incident at a predetermined incident angle into the third surface 58c (the first surface 59a), that is, the dichroic film 48 as a separation surface and is separated into the reflected distance measuring light 49 and the reflected tracking light 51.

In the reflected distance measuring light 49 and the reflected tracking light 51 incident into the dichroic film 48, the reflected distance measuring light 49 is transmitted through the dichroic film 48 and is incident at a right angle by an incident angle 0° into the second surface 59b of the second prism 59. Further, a light with a wavelength different from the wavelength of the distance measuring light 35 is removed from the reflected distance measuring light 49 in a process of passing through the band pass filter 57, the light is reduced only by a predetermined light amount in a process of passing through the concentration gradient film 42 and is received by the photodetector 39.

Further, the reflected tracking light 51 is reflected by the dichroic film 48 (the third surface 58c) and is incident into the first surface 58a. Here, the first surface 58a has optical characteristics that a light with a small incident angle is transmitted, while a light with a large incident angle such as a light incident at an incident angle equal to or larger than a critical angle, for instance, is totally reflected.

The reflected tracking light 51 is incident into the first surface 58a at an incident angle (incident angle equal to or larger than a total-reflection critical angle) which becomes a total reflection, and after being reflected, the reflected tracking light 51 is incident into the fourth surface 58d at an incident angle of 0°. That is, the reflected tracking light 51 is internally reflected in the light receiving prism 44 three times and then, is incident at a right angle into the fourth surface 58d. The reflected tracking light 51 incident into the fourth surface 58d has a light with a wavelength different from a wavelength of the tracking light 36 removed in a process of passing through the band pass filter 43 and is received by the tracking photodetector 56.

As described above, in the first embodiment, the reflected tracking light 51 is internally reflected in the light receiving prism 44 three times, and as compared with the prism in Patent Document 1 in which internal reflection are twice, it is possible to make an optical path length in the light receiving prism 44 of the reflected tracking light 51 shorter, and a back focus which is an optical path length from an end surface on the light receiving prism 44 side of the light receiving lens 45 to the tracking photodetector 56 is ensured.

Therefore, since it is possible to use the light receiving lens 45 with a short focal distance, in a prism measurement with a target such as a corner cube, a reflection sheet or the like as an object, it is possible to widen an angle of view (field of view) of the tracking light 36 emitted to a target and to enlarge a trackable range of a target.

Further, since the light receiving lens 45 with a short focal distance is made usable, it is possible to increase a received light amount in a short distance of the reflected distance measuring light 49 and thus, a measurement of an object with a low measurement reflection rate of an object located in a short distance is made possible, and improvement of a workability is possible.

Further, the light receiving prism 44 is designed such that the reflected tracking light 51 is incident at an incident angle of 0° into the fourth surface 58d opposing the first surface 58a, which is an incident surface of the reflected tracking light 51, and the tracking photodetector 56 is disposed at a focusing position of the reflected tracking light 51 transmitted through the fourth surface 58d.

Therefore, since the sensor substrate 50 on which the tracking photodetector 56 is provided does not interfere with the light receiving lens 45, it is possible to increase a degree of freedom of a design.

Further, since it is possible to adjust a spread angle of the distance measuring light 35 by insertion / removal of the plane-parallel plate 29, it is possible to use a non-prism measurement not requiring a spread angle of the distance measuring light 35 but requiring a light amount and a prism measurement requiring a predetermined spread angle of the distance measuring light 35 but not requiring an increase of the light amount, separately, and it is possible to improve a workability.

Further, a transmission rate (received light amount) of the reflected distance measuring light 49 as received by the photodetector 39 is adjustable by the concentration gradient film 42 and thus, it is possible to prevent a saturation of an electric system of the photodetector 39 and to improve a workability.

Next, in FIG.3, a description will be given on a second embodiment of the present invention. It is to be noted that, in FIG.3, the same components as shown in FIG.2 are referred by the same symbols, and a description thereof will be omitted.

In the second embodiment, the band pass filters 43, 57 in the first embodiment are omitted. On the other hand, a colored glass 61 is interposed between the first prism 58 and the second prism 59.

The colored glass 61 has an absorption band which is a wavelength band of an external light which causes a stray light. An upper surface of the colored glass 61 is joined to the third surface 58c of the first prism 58, and a lower surface of the colored glass 61 is joined to the first surface 59a of the second prism 59. Further, on a joined surface of the first surface 59a and the colored glass 61, a dichroic film 48 is provided.

In the second embodiment, it is configured such that, after the reflected distance measuring light 49 and the reflected tracking light 51 reflected by the second surface 58b of the first prism 58 are transmitted through the colored glass 61, the reflected distance measuring light 49 and the reflected tracking light 51 are incident into the dichroic film 48.

Therefore, in a process of transmitting the colored glass 61, it is possible to remove an external light incident together with the reflected distance measuring light 49 and the reflected tracking light 51. That is, since it is possible to perform the external light removal of the reflected distance measuring light 49 and the reflected tracking light 51 by one colored glass 61, there is no need to provide an external-light removing means such as a band pass filter or the like on the optical paths of the reflected distance measuring light 49 and the reflected tracking light 51, respectively, and it is possible to reduce the number of components.

Further, in the second embodiment, too, since the reflected tracking light 51 is internally reflected in the light receiving prism 44 three times, as compared with a prism in the Patent Document 1 in which internal reflection are twice, it is possible to shorten an optical path length of the reflected tracking light 51 in the light receiving prism 44, to ensure a back focus and to enlarge a trackable range.

Next, in FIG.4, a description will be given on a third embodiment of the present invention. It is to be noted that, in FIG.4, the same components as shown in FIG.2 are referred by the same symbols, and a description thereof will be omitted.

In the third embodiment, a light receiving prism 62 is constituted by a first prism 63 and a second prism 64.

The first prism 63 has a predetermined refractive index and is a polygonal prism having at least a first surface 63a, a second surface 63b, a third surface 63c, and a fourth surface 63d.

The first surface 63a is an incident surface of the reflected distance measuring light 49 and the reflected tracking light 51, and the first surface 63a is configured such that the first surface 63a orthogonally crosses a light receiving optical axis 41 and a tracking light receiving optical axis 55. Further, on the first surface 63a, a short pass filter is deposited over an entire surface.

To the second surface 63b, the reflected distance measuring light 49 and the reflected tracking light 51 transmitted through the first surface 63a are incident, and a short pass filter is deposited over an entire surface of the second surface 63b. It is to be noted that the second surface 63b continues from an upper end of the first surface 63a such that an angle formed with the first surface 63a becomes an acute angle and is tilted such that the second surface 63b is separated from the first surface 63a downward from above.

The third surface 63c is configured such that the reflected distance measuring light 49 and the reflected tracking light 51 reflected by the second surface 63b are incident and the third surface 63c is tilted to a lower side by a predetermined angle from a lower end of the second surface 63b toward a left. Further, the fourth surface 63d is formed between a lower end of the first surface 63a and a lower end of the third surface 63c.

Further, the first prism 63 is configured such that the reflected tracking light 51 is incident at a right angle by an incident angle of 0° to a part of the second surface 63b. A tracking photodetector 56 is provided at a focusing position of the reflected tracking light 51. Further, between a part of the second surface 63b and the tracking photodetector 56 and at a position not in contact with the second surface 63b, a band pass filter 65 which transmits only a light of a wavelength band of the tracking light 36 is provided.

The second prism 64 has a predetermined refractive index and is a polygonal prism having at least a first surface 64a and a second surface 64b. The first surface 64a is an incident surface of the reflected distance measuring light 49 and the reflected tracking light 51 reflected in the first prism 63, has the same area as that of the third surface 63c, and is joined to the third surface 63c. That is, the third surface 63c and the first surface 64a are joined surfaces which join the first prism 63 and the second prism 64, and the dichroic film 48 is provided on the joined surfaces.

Further, the second surface 64b opposes the first surface 64a and is configured such that the reflected distance measuring light 49 having been transmitted through the dichroic film 48 is incident at an incident angle of 0°. Further, on the second surface 64b, a band pass filter 66 is provided over an entire surface. The band pass filter 66 has an optical characteristic that only a light in a wavelength band of a distance measuring light 35 is transmitted. Further, a photodetector 39 is provided at a focusing position of the reflected distance measuring light 49.

The reflected distance measuring light 49 and the reflected tracking light 51 incident at an incident angle of 0° from the first surface 63a into the light receiving prism 62 via the light receiving lens 45 are incident into the second surface 63b at a predetermined incident angle with a transmittance in the vicinity of 0%, is reflected toward the third surface 63c, and the reflected distance measuring light 49 and the reflected tracking light 51 are separated by the dichroic film 48. The reflected distance measuring light 49 having been transmitted through the dichroic film 48 is sequentially transmitted through the second surface 64b, the band pass filter 66, the concentration gradient film 42, has a light other than the reflected distance measuring light 49 removed, and is received by the photodetector 39 in a state in which a light is reduced to a predetermined light amount. Here, the vicinity of 0% is assumed to include a range from 0.1% to 10%. Further, in the following explanation, too, when it is described as a vicinity of 0%, it is assumed to include a range from 0.1% to 10%.

Further, the reflected tracking light 51 reflected by the dichroic film 48 is incident into the first surface 63a at a predetermined incident angle at which a transmittance becomes in the vicinity of 0%, is totally reflected by the first surface 63a, and is incident into a part of the second surface 63b (an upper part of the second surface 63b in FIG.4) at a right angle by an incident angle of 0° in the vicinity of a transmittance at 100%. That is, after the reflected tracking light 51 is internally reflected three times in the light receiving prism 62, the reflected tracking light 51 is incident into the second surface 63b at an incident angle by 0°. The reflected tracking light 51 incident into the second surface 63b is sequentially transmitted through the second surface 63b and the band pass filter 65, and in a state where a light other than the reflected tracking light 51 such as an external light has been removed, the reflected tracking light 51 is received by the tracking photodetector 56. Here, the vicinity of 100% is assumed to include a range from 90% to 99.9%. Further, in the following explanation, too, when it is described as the vicinity of 100%, it is assumed to include a range from 90% to 99.9%.

Here, the short pass filters deposited on the first surface 63a and the second surface 63b have optical characteristic that a light with a small incident angle is transmitted, and a light with a large incident angle is reflected. FIG.5 is a graph for explaining a relation between a transmittance and a wavelength of the short pass filter.

In FIG.5, a reference numeral 67 indicates a wavelength band of the distance measuring light 35, a reference numeral 68 indicates a wavelength band of the tracking light 36. Further, a reference numeral 69 indicates a graph in a case where an incident angle is large, and a reference numeral 71 indicates a graph in a case where an incident angle is small. It is to be noted that, in FIG.5, the graph 69 and the graph 71 are illustrated by being slightly shifted vertically, but the graphs 69, 71 are both constituted such that a transmittance changes from 0% to 100%.

When an incident angle with respect to the second surface 63b is large, that is, in a case of an incident angle when the reflected distance measuring light 49 and the reflected tracking light 51 having been transmitted through the first surface 63a are incident into the second surface 63b, as shown in the graph 69, transmittances of the wavelength band 67 and the wavelength band 68 are in the vicinity of 0%. Therefore, the reflected distance measuring light 49 and the reflected tracking light 51 are reflected by the second surface 63b. It is to be noted that the incident angle at this time may be smaller than a critical total-reflection angle.

Further, when an incident angle with respect to the first surface 63a is small, that is, in a case of an incident angle when the reflected tracking light 51 reflected by the third surface 63c is incident into the first surface 63a, as shown in the graph 69, a transmittance of the wavelength band 68 is in the vicinity of 0%. Therefore, the reflected tracking light 51 is reflected by the first surface 63a. It is to be noted that the incident angle at this time may be smaller than a critical total-reflection angle.

On the other hand, when an incident angle with respect to the second surface 63b is small, that is, in a case of an incident angle (0°) when the reflected tracking light 51 reflected by the first surface 63a is incident into the second surface 63b, as shown in the graph 71, a transmittance of the wavelength band 68 is in the vicinity of 100%. Therefore, the reflected tracking light 51 is transmitted through the second surface 63b and is received by the tracking photodetector 56 via the band pass filter 65.

Further, when an incident angle with respect to the first surface 63a is small, that is, in a case of an incident angle when the reflected distance measuring light 49 and the reflected tracking light 51 are incident into the first surface 63a via the light receiving lens 45, as shown in the graph 71, transmittances of the wavelength band 67 and the wavelength band 68 are in the vicinity of 100%. Therefore, the reflected distance measuring light 49 and the reflected tracking light 51 are transmitted through the first surface 63a.

In the third embodiment, since a short pass filter is provided on the second surface 63b, it is possible to cause the second surface 63b to serve both as a reflection surface of the reflected distance measuring light 49 and the reflected tracking light 51 and a transmission surface of the reflected tracking light 51.

Therefore, since there is no need to separately form a projection surface for causing the tracking photodetector 56 to receive the reflected tracking light 51 on the first prism 63, it is possible to reduce a machining difficulty, a machining time, and a manufacturing cost of the first prism 63.

Further, since it is possible to make an incident angle when the reflected distance measuring light 49 and the reflected tracking light 51 are reflected smaller than a critical total-reflection angle, it is possible to improve a degree of designing freedom of the light receiving prism 62.

Further, in the third embodiment, too, since the reflected tracking light 51 is internally reflected in the light receiving prism 62 three times, and a back focus is ensured, it is possible to make a use of the light receiving lens 45 with a short focal distance, to enlarge a trackable range of a target, to increase a received light amount at a short-distance measurement, and to improve a distance measuring accuracy.

It is to be noted that, in the third embodiment, the short pass filter is deposited to the first surface 63a and the second surface 63b, but it may be so constituted such that an AR coat is deposited instead of a short pass filter. When an AR coat is deposited on the first surface 63a and the second surface 63b, there is a need to design the light receiving prism 62 such that an incident angle when the reflected distance measuring light 49 and the reflected tracking light 51 are reflected by the second surface 63b and an incident angle when the reflected tracking light 51 is reflected by the first surface 63a are equal to or larger than a critical total-reflection angle, respectively. However, since an AR coat is less expensive than a short pass filter, as compared with a case where a short pass filter is deposited, it is possible to reduce a manufacturing cost of the light receiving prism 62.

Further, in the above description, a case in which a short pass filter is deposited on both the first surface 63a and the second surface 63b and a case in which an AR coat is deposited on both the first surface 63a and the second surface 63b have been described, but it is needless to say that a short pass filter is deposited on either one of the first surface 63a and the second surface 63b, while an AR coat is deposited on the other.

Further, an incident angle at which a transmittance is in the vicinity of 0% and an incident angle equal to or larger than a critical total-reflection angle as above-described are designed as appropriate in accordance with a glass material (refractive index) of a prism used as the light receiving prism 62. Further, a glass material of a prism is selected as appropriate by considering a cost, a size, a specific gravity, an availability, a machinability, a resistance to an environment and the like.

Next, in FIG.6, a description will be given on a fourth embodiment of the present invention. It is to be noted that, in FIG.6, the same components as shown in FIG.4 are referred by the same symbols, and a description thereof will be omitted.

In the fourth embodiment, the band pass filters 65, 66 in the third embodiment are omitted. On the other hand, a colored glass 72 is interposed between the first prism 63 and the second prism 64.

The colored glass 72 has a wavelength band of an external light as an absorption band, and an upper surface is joined to the third surface 63c of the first prism 63, and a lower surface is joined to the first surface 64a of the second prism 64. Further, the dichroic film 48 is provided on a joined surface of the first surface 64a and the colored glass 72.

In the fourth embodiment, it is configured such that the reflected distance measuring light 49 and the reflected tracking light 51 reflected by the second surface 63b are transmitted through the colored glass 72 and then, the reflected distance measuring light 49 and the reflected tracking light 51 are incident into the dichroic film 48.

Therefore, since it is possible to remove an external light from the reflected distance measuring light 49 and the reflected tracking light 51 by one colored glass 72, there is no need to provide a band pass filter in optical paths of the reflected distance measuring light 49 and the reflected tracking light 51, respectively, and it is possible to reduce the number of components.

Further, in the fourth embodiment, too, the reflected tracking light 51 is internally reflected three times in the light receiving prism 62 and thus, it is possible to ensure a back focus of the reflected tracking light 51, to enlarge a trackable range, to increase a received light amount at a short-distance measurement, and to improve a distance measuring accuracy.

Further, in the fourth embodiment, too, a short pass filter may be deposited on both the first surface 63a and the second surface 63b, an AR coat may be deposited on both the first surface 63a and the second surface 63b, or a short pass filter may be deposited on either one of the first surface 63a and the second surface 63b, while an AR coat may be deposited on the other.

Next, in FIG.7, a description will be given on a fifth embodiment of the present invention. It is to be noted that, in FIG.7, the same components as shown in FIG.2 are referred by the same symbols, and a description thereof will be omitted.

FIG.7 shows a part of a distance measuring module 73 in a surveying instrument capable of a distance measurement, a tracking and a sighting, for instance, a total station, and the distance measuring module 73 has the distance measuring light receiving module 24, the tracking light receiving module 26 and a sighting module 74.

A light receiving prism 75 in the fifth embodiment is constituted by the first prism 58 and the second prism 59 in the first embodiment, a third prism 76 joined to the second surface 58b of the first prism 58. Since the other constitutions of the distance measuring light receiving module 24 and the tracking light receiving module 26 are the same as those in the first embodiment, a description will be omitted.

The third prism 76 is a polygonal prism having a first surface 76a and a second surface 76b, for instance, and a short pass filter as a separation film which separates a visible light 80 (background light) from the reflected distance measuring light 49 and the reflected tracking light 51 is deposited on the first surface 76a, which is a joined surface with the first prism 58. The short pass filter has an optical characteristic that the visible light 80 is transmitted, and the reflected distance measuring light 49 and the reflected tracking light 51 with an incident angle equal to or larger than a predetermined incident angle are reflected. Further, the second surface 76b is configured such that the visible light 80 transmitted through the first surface 76a is incident at an incident angle 0°.

The sighting module 74 has a sighting optical axis 77, and the sighting optical axis 77 coincides with the light receiving optical axis 41 and the tracking light receiving optical axis 55. That is, the visible light 80 is incident coaxially with the reflected distance measuring light 49 and the reflected tracking light 51, and the sighting module 74 is provided on the transmission optical axis of the separation film. Further, the sighting module 74 is a sighting optical system and has a light-receiving system lens group 78, the light receiving prism 75, a focusing lens 79, a Poro prism 81, a reticle 82, and an ocular lens 83 as provided on the sighting optical axis 77.

A worker performs focusing via the sighting module 74 based on the visible light 80 incident coaxially with the reflected distance measuring light 49 and the reflected tracking light 51, converts an inverted image to an erected image, and directs the sighting optical axis 77 toward an arbitrary object, and can sight an object.

In the fifth embodiment, too, the reflected tracking light 51 is internally reflected three times in the light receiving prism 75 and ensures a back focus and thus, it becomes possible to use the light-receiving system lens group 78 with a short focal distance, to enlarge a trackable range of a target, to increase a received light amount at a short-distance measurement, and to improve a measurement accuracy in a short distance.

It is to be noted that, in the fifth embodiment, band pass filters 43, 57 are provided on the light receiving prism 75, but similarly to the second embodiment, it is needless to say that the band pass filters 43, 57 may be omitted, and a colored glass may be interposed between the first prism 58 and the second prism 59.

### REFERENCE SIGNS LIST

- 1: Surveying instrument
- 15: Scanning mirror
- 17: Arithmetic control module
- 19: Distance measuring module
- 23: Distance measuring light projecting module
- 24: Distance measuring light receiving module
- 25: Tracking light projecting module
- 26: Tracking light receiving module
- 35: Distance measuring light
- 36: Tracking light
- 44: Light receiving prism
- 48: Dichroic film
- 49: Reflected distance measuring light
- 51: Reflected tracking light
- 58: First prism
- 59: Second prism
- 62: Light receiving prism
- 63: First prism
- 64: Second prism
- 75: Light receiving prism

## Claims

1. A surveying instrument comprising: a distance measuring light projecting module having a light emitter which projects a distance measuring light to an object, a distance measuring light receiving module having a photodetector which receives a reflected distance measuring light from said object, a tracking light projecting module having a tracking light emitter which projects a tracking light coaxially with said distance measuring light to said object, a tracking light receiving module having a tracking photodetector which receives a reflected tracking light from said object coaxially with said reflected distance measuring light, and an arithmetic control module which controls said distance measuring light projecting module and said tracking light projecting module, calculates a distance to said object based on a light receiving result of said reflected distance measuring light with respect to said photodetector, and calculates a position deviation between said object and a center of said tracking photodetector based on a light receiving position of said reflected tracking light with respect to said tracking photodetector, wherein said distance measuring light receiving module and said tracking light receiving module each have a light receiving prism, and said light receiving prism is configured to internally reflect said reflected tracking light three times.

2. The surveying instrument according to claim 1, wherein said light receiving prism has a first prism and a second prism joined to said first prism, a separation surface is formed on a joined surface of said first prism and said second prism, said separation surface is configured to cause said reflected distance measuring light to be transmitted and to be received by said photodetector and to cause said reflected tracking light to be reflected and received by said tracking photodetector.

3. The surveying instrument according to claim 2, wherein said first prism is configured to have a first surface into which said reflected tracking light is incident at a right angle, a second surface which reflects said reflected tracking light having been transmitted through said first surface, a third surface as said separation surface which reflects said reflected tracking light reflected by said second surface toward said first surface, and a fourth surface into which said reflected tracking light reflected by said first surface is incident at a right angle.

4. The surveying instrument according to claim 2, wherein said first prism is configured to have a first surface into which said reflected tracking light is incident at a right angle, a second surface which reflects said reflected tracking light having been transmitted through said first surface, and a third surface as said separation surface which reflects said reflected tracking light reflected by said second surface toward said first surface, and to deposit short pass filters on said first surface and said second surface, wherein said reflected tracking light having been transmitted through said first surface is incident into said second surface at an incident angle at which a transmittance is in the vicinity of 0%, said reflected tracking light sequentially reflected by said second surface and said third surface is incident into said first surface at an incident angle at which a transmittance is in the vicinity of 0%, and said reflected tracking light reflected by said first surface is incident into said second surface at a right angle.

5. The surveying instrument according to claim 2, wherein said first prism is configured to have a first surface into which said reflected tracking light is incident at a right angle, a second surface which reflects said reflected tracking light having been transmitted through said first surface, and a third surface as said separation surface which reflects said reflected tracking light reflected by said second surface toward said first surface, and to deposit AR coat on said first surface and said second surface, wherein said reflected tracking light having been transmitted through said first surface is incident into said second surface at an incident angle equal to or larger than a critical total-reflection angle, said reflected tracking light sequentially reflected by said second surface and said third surface is incident into said first surface at an incident angle equal to or larger than a critical total-reflection angle, and said reflected tracking light reflected by said first surface is incident into said second surface at a right angle.

6. The surveying instrument according to claim 3, wherein said light receiving prism further has a third prism joined to said second surface of said first prism, a separation film, which reflects said reflected distance measuring light and said reflected tracking light and transmits a visible light, is formed on a joined surface of said first prism and said third prism, and a sighting module is provided on a transmission optical axis of said separation film.

7. The surveying instrument according to any one of claims 3 to 6, wherein band pass filters are provided between said photodetector and said light receiving prism, and between said tracking photodetector and said light receiving prism, respectively.

8. The surveying instrument according to any one of claims 3 to 6, wherein a colored glass is interposed between said first prism and said second prism, and said separation surface is formed on a joined surface between said colored glass and said second prism.
